# DEMANDE DE BREVET EUROPEEN

(11) **EP 1 186 492 A1**
(43) Date de publication de la demande: **13.03.2002**
(21) Numéro de dépôt: 01203425.2
(22) Date de dépôt: 12.09.2001
(51) Int. Cl.: B60S 1/04

(54) **Agencement d'essuie-glace comportant des moyens de protection de la lame d'essuyage en position de parking.**

(30) Priorité: 12.09.2000 FR 0011580
(71) Demandeur: VALEO SYSTEMES D'ESSUYAGE, 78321 La Verrière (FR)
(72) Inventeur: Eustache, Jean-Pierre, 92160 Antony (FR); Trebouet, Marcel, 92400 Courbevoie (FR); Hospital, Eric, 86100 Chatellerault (FR)

(57) **Abrégé**

L'invention propose un agencement du type comportant un essuie-glace (20) qui comporte une lame (30) d'essuyage de la vitre qui est associée à au moins un élément structurel (32), et du type dans lequel l'essuie-glace est susceptible d'occuper une position de parking dans laquelle au moins la lame d'essuyage (30) est escamotée dans un logement (46) qui comporte une face supérieure ouverte (48) par laquelle la lame d'essuyage (30) est susceptible de pénétrer dans le logement (46) lorsque l'essuie glace atteint sa position de parking, et du type comportant un volet (40) de fermeture du logement (46) qui est monté mobile entre une position ouverte et une position fermée dans laquelle le volet (40) obture le logement à l'intérieur duquel la lame d'essuyage (30) est escamotée, caractérisé en ce que le volet constitue un équipage mobile avec la lame d'essuyage (30).

## Description

La présente invention concerne un agencement d'un dispositif d'essuie-glace d'une vitre de véhicule automobile.

L'invention concerne plus particulièrement un agencement pour l'essuyage d'une vitre, notamment d'un pare-brise, du type comportant au moins un essuie-glace, animé d'un mouvement de balayage alterné rotatif ou linéaire de la vitre, qui comporte notamment une lame souple d'essuyage de la vitre qui est associée à au moins un élément structurel qui s'étend au dessus de la lame d'essuyage.

Dans un tel essuie-glace, selon la conception la plus couramment répandue, l'élément structurel peut être constitué par des vertèbres de renfort du talon supérieur de la lame d'essuyage, qui est réalisée en élastomère, les vertèbres étant associées à une structure articulée de support de lame renforcée par les vertèbres, pour constituer un sous-ensemble généralement appelé balai d'essuie-glace.

Le balai d'essuie-glace peut être entraîné directement en balayage alterné ou être porté, de manière articulée, à l'extrémité libre d'un bras d'essuie-glace animé d'un mouvement linéaire ou rotatif alterné de balayage.

Selon une autre conception visant à réaliser des essuie-glace de faible hauteur, la structure articulée du balai d'essuie-glace est supprimée et ce sont les vertèbres, ou des éléments de renfort structurels équivalents aux vertèbres, qui sont associées à la lame d'essuyage souple pour constituer le balai d'essuie-glace proprement dit, aussi appelé "flat-blade", ce balai "réduit" de faible hauteur étant lui aussi entraîné en balayage par un mécanisme adéquat comportant le cas échéant un bras d'essuie-glace.

La lame d'essuyage, qui en section transversale se présente sous la forme d'un sapin ou d'une flèche renversée, coopère par son bord libre d'extrémité avec la surface de la vitre à essuyer. La lame d'essuyage est un élément déterminant en vue de l'obtention d'une bonne qualité d'essuyage. Il est notamment souhaitable que la lame d'essuyage conserve ses qualités intrinsèques et ses caractéristiques de manière à assurer une grande durée de vie à la lame d'essuyage pour éviter que le propriétaire du véhicule n'ait à la remplacer trop souvent.

Afin d'améliorer la fiabilité de la lame d'essuyage, il a d'une part été proposé que, lorsque l'essuie-glace occupe une position de repos prolongée aussi appelée position de rangement ou de parking, la lame d'essuyage ne soit plus en contact, par son bord d'extrémité libre avec l'élément en vis-à-vis, c'est-à-dire soit avec une portion de la vitre en regard de laquelle elle se situe en position de parking, soit avec un élément de structure de caisse du véhicule ou de la carrosserie de ce dernier.

On a ainsi proposé différentes solutions aboutissant globalement à soulever ou à décaler verticalement la lame d'essuyage par rapport à l'élément en vis-à-vis.

Afin d'améliorer la fiabilité de la lame d'essuyage et d'éviter sa détérioration lorsque l'essuie-glace n'est pas utilisé, c'est-à-dire pendant la plus grande partie de la vie du véhicule, il est aussi souhaitable de pouvoir abriter la lame d'essuyage lorsqu'elle est en position de parking, en vue notamment de la préserver des intempéries, des pollutions extérieures, et du rayonnement ultraviolet.

Dans ce but, il a été proposé par exemple d'abriter au moins la lame d'essuyage dans un logement ou dans un puits aménagé en regard de la lame d'essuyage lorsque l'essuie-glace est dans sa position de parking.

Un exemple d'un tel aménagement est décrit et représenté dans le document US-A-3.213.478.

Afin d'améliorer la conception décrite et représentée dans ce document dans lequel l'essuie-glace est abrité dans un puits de protection, dont la face supérieure ouverte de ce dernier, permettant d'amener l'essuie-glace en position de parking dans le puits, demeure ouverte aux intempéries et aux rayonnements, il a aussi été proposé, par exemple dans le document US-A-3.601.839, d'obturer complètement la face ouverte du puits ou logement de rangement de l'essuie-glace au moyen d'un volet d'obturation qui est monté articulé sur la structure du véhicule.

Cette conception fait appel à des moyens de commande du volet d'obturation de la face ouverte du logement qui sont constitués par des moyens électromécaniques qui sont mis en oeuvre par un circuit de commande de l'ouverture et de la fermeture qui reçoit des signaux provenant du circuit de commande du balayage effectué par l'essuie-glace.

Selon une autre conception, le volet articulé est commandé mécaniquement à la main ou au pied par le conducteur.

Enfin, selon encore une autre conception, les moyens de commande du pivotement du volet articulé sont du type à actionnement hydraulique et comportant un vérin d'actionnement commandé par un actionneur portant un piston sur lequel agit l'essuie-glace.

Afin de simplifier une telle conception, le demandeur a proposé dans la demande de brevet français No. ?? (projet VSE 94263) une conception dans laquelle les moyens de commande du pivotement du volet comportent un doigt de commande qui fait saillie par rapport au plan général du volet et avec lequel l'essuie-glace est susceptible de coopérer pour provoquer le pivotement du volet de sa position ouverte à sa position fermée lorsque l'essuie-glace pénètre dans le logement.

Dans cette dernière solution, il est aussi proposé que, lorsque l'essuie-glace atteint sa position de parking, la lame d'essuyage soit automatiquement soulevée, c'est-à-dire que son bord d'extrémité libre n'est plus en appui contre une surface en vis-à-vis.

Toutes les solutions qui viennent d'être évoquées faisant appel à un volet monté articulé sur le véhicule sont globalement complexes et encombrantes.

L'invention a pour but de proposer un nouvel agencement d'un dispositif d'essuie-glace qui permet d'assurer une grande fiabilité de la lame d'essuyage tout en étant de conception simple, économique et peu encombrante.

Dans ce but, l'invention propose un agencement d'un dispositif d'essuie-glace pour l'essuyage d'une vitre de véhicule automobile, notamment d'un pare-brise, du type comportant au moins un essuie-glace, animé d'un mouvement de balayage alterné de la vitre, qui comporte notamment une lame souple d'essuyage de la vitre qui est associée à au moins un élément structurel qui s'étend au-dessus de la lame d'essuyage, et du type dans lequel l'essuie-glace est susceptible d'occuper une position de parking dans laquelle au moins la lame d'essuyage est escamotée dans un logement, ou puits, de forme générale allongée selon la direction générale de la lame et qui comporte une face supérieure ouverte par laquelle la lame d'essuyage est susceptible de pénétrer dans le logement lorsque l'essuie glace atteint sa position de parking, et du type comportant un volet de fermeture du logement qui est monté mobile entre une position ouverte dans laquelle la face ouverte du logement est dégagée, et une position fermée dans laquelle le volet obture le logement à l'intérieur duquel la lame d'essuyage est escamotée, caractérisé en ce que le volet constitue un équipage mobile avec la lame d'essuyage.

Selon d'autres caractéristiques de l'invention :
- le volet est constitué au moins en partie par l'élément structurel associé à la lame d'essuyage ;
- la face ouverte du logement est délimitée latéralement par deux bords parallèles et opposés, et le volet comporte deux ailes latérales parallèles et opposées qui, en position escamotée de la lame d'essuyage s'étendent transversalement chacune au-dessus et au delà du bord correspondant de la face ouverte du logement, avec interposition de moyens d'étanchéité ;
- les moyens d'étanchéité sont portés par le volet ;
- la face ouverte du logement est une fente délimitée par deux bords parallèles opposés ;
- la fente est délimitée par deux bords opposés en vis-à-vis appartenant chacun à un élément de structure ou de carrosserie du véhicule ;
- la fente est formée dans la vitre à essuyer ;
- la fente est délimitée par un bord de la vitre et par un bord d'un élément de structure ou de carrosserie du véhicule ;
- chaque bord de la fente est muni d'une garniture ;
- le logement comporte des moyens de régulation de la température et/ou de l'hygrométrie à l'intérieur du logement ;
- le logement comporte des moyens de traitement physique et/ou chimique de la lame d'essuyage en position escamotée ;
- lesdits moyens de traitement comportent des moyens d'aspersion de la lame d'essuyage avec un liquide, un gel ou une poudre de traitement ;
- lesdits moyens de traitement comportent un gel ou un liquide de traitement contenu dans le logement pour constituer un bain de traitement de la lame d'essuyage ;
- les moyens de traitement comportent un élément, notamment une membrane gonflable, revêtu d'un liquide ou d'un gel de traitement et qui est susceptible de se déplacer pour venir au contact de la lame d'essuyage en position escamotée ;
- le logement comporte des moyens de surveillance optique de l'état de la lame d'essuyage en position escamotée ;
- l'agencement comporte des moyens de fermeture de la face ouverte du logement lorsque la lame d'essuyage n'est pas escamotée dans le logement ;
- les moyens de fermeture comportent une membrane gonflable ;
- le logement est formé dans un boîtier qui est monté pivotant, par rapport à la structure du véhicule et autour d'un axe parallèle à la direction longitudinale du logement, entre une position extrême de repos qu'il occupe lorsque l'essuie-glace est en fonctionnement et dans laquelle la face ouverte du logement est masquée, et une position active qu'il occupe lorsque l'essuie-glace est dans sa position de parking et dans laquelle la face ouverte du logement est orientée pour permettre à la lame d'essuyage d'être reçue en position escamotée dans le logement ;
- des moyens de commande du pivotement du boîtier vers sa position active comportent un ergot de commande avec lequel l'essuie-glace est susceptible de coopérer lorsqu'il approche de sa position de parking ;
- le boîtier est rappelé élastiquement vers sa position de repos ;
- la lame d'essuyage comporte une vertèbre de renfort qui coopère avec l'ergot.

D'autres caractéristiques et avantages de l'invention apparaîtront à la lecture de la description détaillée qui suit pour la compréhension de laquelle on se reportera aux dessins annexés dans lesquels :
- la figure 1 est une vue schématique en perspective de la partie avant d'un véhicule automobile dont le pare-brise est équipé d'un dispositif d'essuyage à balayage rotatif alterné qui est réalisé conformément aux enseignements de l'invention ;
- la figure 2 est une vue schématique en section transversale selon la ligne 2-2 de la figure 1 et sur laquelle, comme à la figure 1, l'essuie-glace est en position de parking et la lame d'essuyage est représentée en position escamotée dans son logement ;
- les figures 3 et 4 sont des vues similaires à celle des figures 1 et 2 sur lesquelles l'essuie-glace est dans une position d'essuyage du pare-brise ;
- les figures 5 à 9 sont des vues schématiques en section similaires à celle de la figure 2 qui illustrent des différents modes de réalisation de l'invention analogues au premier mode de réalisation représenté aux figures 1 à 4 dans lesquelles le logement ou puits qui reçoit la lame d'essuyage en position escamotée est formé dans une partie fixe du véhicule ;
- la figure 10 est une vue de détail en perspective qui illustre un autre mode de réalisation d'un dispositif d'essuyage conforme aux enseignements de l'invention dans lequel le logement est formé dans un boîtier monté rotatif par rapport à la structure du véhicule ;
- la figure 11 est une vue de détail en perspective du mode de réalisation représenté à la figure 10 dans lequel la lame d'essuyage est représentée lors de sa phase d'approche du boîtier ; et
- les figures 12 à 15 sont des vues schématiques en section transversale qui représentent l'agencement des figures 10 à 11 dans quatre positions relatives de la lame d'essuyage et du boîtier comportant le logement pour la lame d'essuyage, qui sont quatre positions angulaires successives, depuis la position d'approche de la figure 12 jusqu'à la position escamotée de la lame d'essuyage de la figure 15.

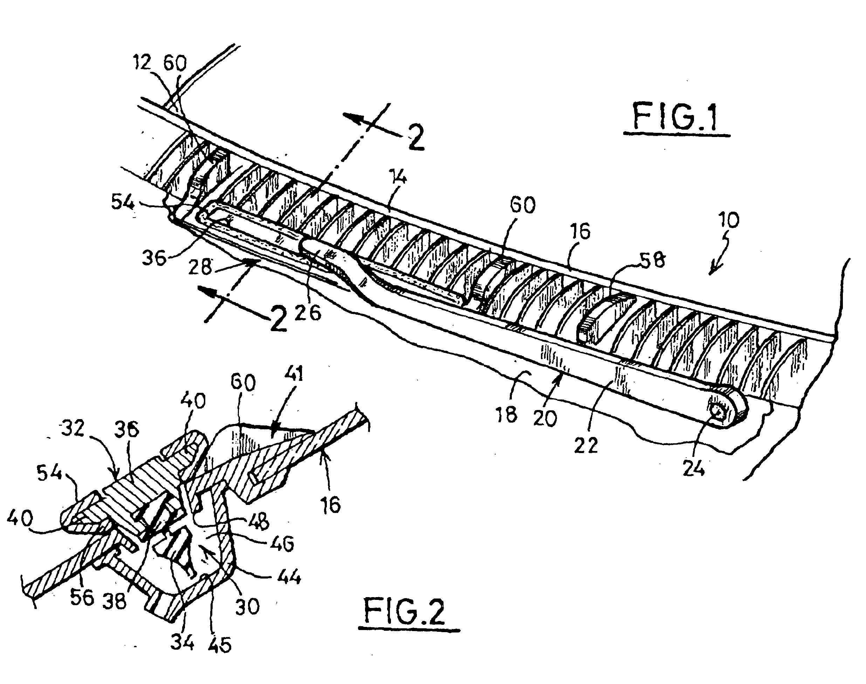

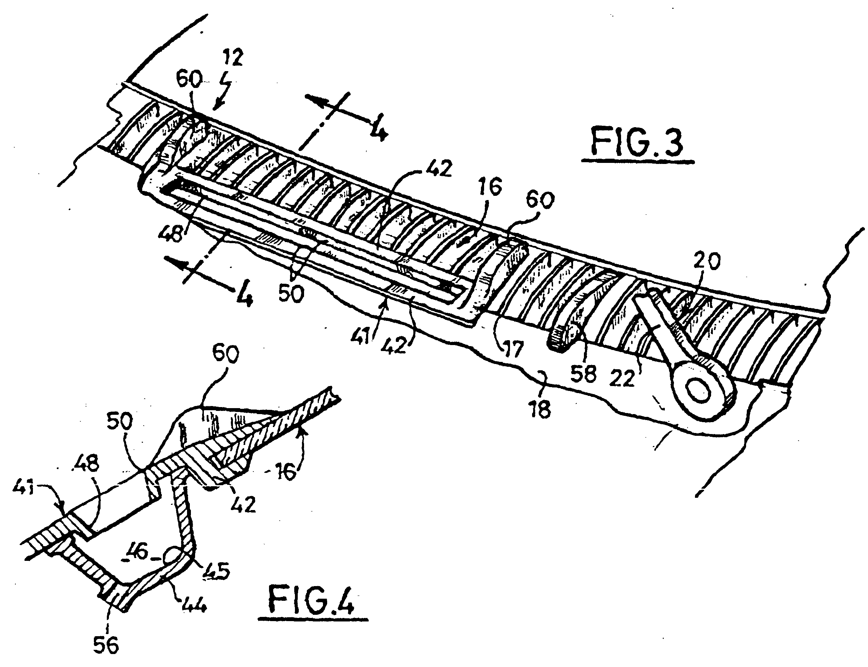

On reconnaît aux figures 1 et 3 une partie d'un véhicule automobile 10 comportant un pare-brise 12 dont le bord inférieur 14 est équipé d'un joint qui s'étend au dessus d'une grille d'auvent 16 qui se prolonge par une tôle 18 délimitant en partie le compartiment moteur.

L'essuyage du pare-brise 12 est assuré au moyen par exemple de deux essuie-glaces antagonistes 20 dont un seul est visible aux figures 1 et 3.

L'essuie-glace 20 comporte, de manière connue, un bras d'essuie-glace 22 qui est monté à rotation autour d'un axe de balayage 24 et il porte, à son extrémité libre 26, un balai d'essuie-glace 28 qui est ici un balai de hauteur réduite, du type "flat blade".

Comme on peut le voir notamment à la figure 2, le balai 28 est constitué pour l'essentiel par une lame inférieure d'essuyage 30 et par un élément structurel supérieur de renfort et de support 32 de la lame d'essuyage 30.

De manière connue, la lame d'essuyage 30 est en forme générale de flèche inversée et elle est délimitée par un bord longitudinal inférieur d'extrémité libre 34 qui est prévu pour coopérer avec la surface extérieure du pare-brise 12 à essuyer, lorsque le bras 22 est entraîné à cet effet en un mouvement de balayage rotatif alterné.

L'élément structurel de renfort 32 se présente ici sous la forme d'un barreau 36 d'orientation longitudinale qui chevauche le talon supérieur 38 de la lame d'essuyage 30 et qui comporte deux ailes latérales parallèles, opposées et coplanaires 40 qui s'étendent transversalement de part et d'autre du corps 36.

Comme on peut le voir aux figures 3 et 4, au voisinage du bord inférieur 17 de la grille d'auvent 16, il est prévu un boîtier fixe 41 comportant un cadre supérieur 42 et une gouttière inférieure interne fermée 44 de manière à délimiter un logement 46 qui, lorsque l'essuie-glace est dans sa position de parking représentée aux figures 1 et 2, reçoit la lame souple d'essuyage 30 dans une position escamotée.

Conformément aux enseignements de l'invention, c'est l'équipage mobile constitué par la lame d'essuyage 30 avec son élément structurel associé 32, 40 qui constitue le volet de fermeture de la face supérieure ouverte du logement 46, c'est-à-dire le volet de fermeture de la lumière ou fenêtre 48 délimitée par le cadre 42.

A cet effet, et comme on peut le voir notamment à la figure 2, les ailes latérales 40 de l'élément structurel de renfort 32 s'étendent transversalement au delà des bords longitudinaux parallèles et opposés 50 de la fenêtre 48.

Pour assurer une fermeture étanche de la face supérieure ouverte 48du logement 46, chaque aile latérale 40 de l'élément structurel 32 est avantageusement équipée d'une garniture d'étanchéité 54 qui, comme on peut le voir à la figure 1, s'étend tout autour de l'élément 32 et dont les lèvres inférieures 56 sont interposées entre les ailes 40 et la face supérieure en vis-à-vis de la portion correspondante du cadre 42.

Afin de permettre l'évacuation d'eau ou d'autres éléments polluants qui pénètrent dans le logement ou puits 46 lorsque l'essuie-glace est en fonctionnement, on peut prévoir avantageusement un ou plusieurs trous d'évacuation 56 dans le fond de la gouttière 44.

Afin de faciliter l'entrée ou pénétration de la lame d'essuyage 30 dans le logement 46 lorsque l'essuie-glace 22 atteint sa position de rangement de parking, vers laquelle il peut être guidé par une rampe 58 rapportée sur la grille 16, il est également prévu deux rampes 60 agencées aux extrémités longitudinales opposées du boîtier 41 qui coopèrent avec les extrémités longitudinales correspondantes de l'élément structurel 32 pour soulever le balai d'essuie-glace 28, et donc la lame d'essuyage 30, lors de sa fin de course vers la position de parking, puis pour la guider afin qu'elle pénètre dans le logement 46 et pour que l'élément 32 vienne obturer la fenêtre ou lumière 48.

Grâce à cette conception selon l'invention, le volet de fermeture du puits 46 appartient au balai d'essuie-glace 28 avec lequel il forme un tout structurel et avec lequel il se déplace en balayage alterné lors de l'essuyage du pare-brise.

La conception selon l'invention ne nécessite donc aucun moyen de commande de la position du volet comme c'est le cas dans les conceptions selon l'état de la technique.

Bien entendu, le boîtier 41 ou une structure équivalente délimitant le logement ou puits 46 peut être réalisé moulé en une seule pièce avec la grille d'auvent 16.

Le dimensionnement du logement 46, et notamment sa profondeur, est tel que, en position escamotée de la lame d'essuyage 30 dans le puits 46 et lorsque les ailes 40 sont en appui contre le cadre 42, le bord d'extrémité libre inférieur 34 soit éloigné de la paroi de fond en vis-à-vis 45 de la gouttière 44.

On décrira maintenant les autres modes de réalisation de l'invention en utilisant les mêmes chiffres de référence pour des éléments identiques, similaires ou analogues à ceux décrits précédemment.

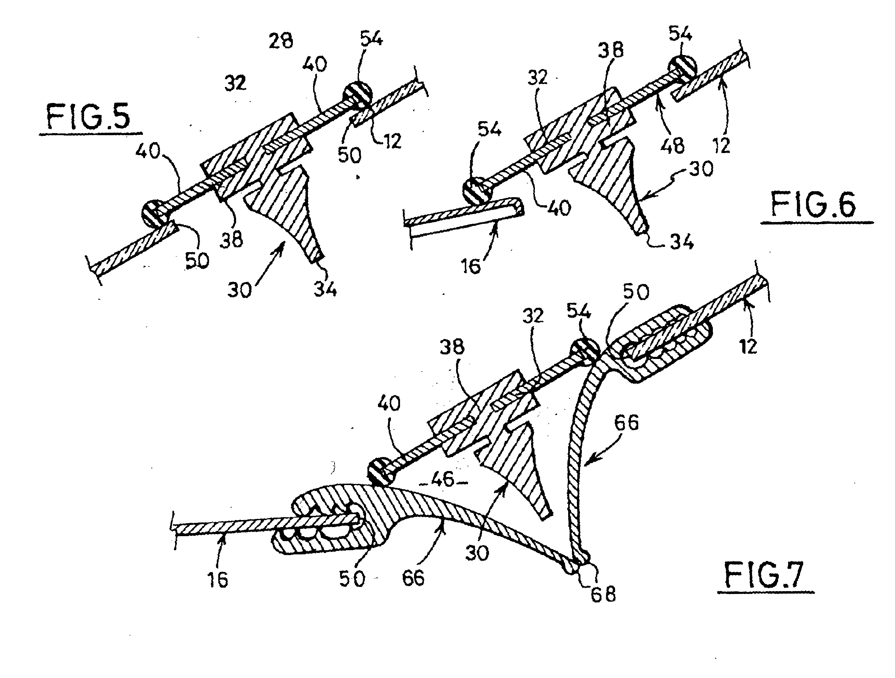

Dans le deuxième mode de réalisation représenté à la figure 5, la face ouverte ou fenêtre 48 permettant d'escamoter la lame d'essuyage 30 est constituée par une fente formée directement dans la vitre 12 et qui est délimitée par deux bords parallèles et opposés 50 en vis-à-vis de la vitre.

L'élément structurel associé à la lame d'essuyage 30 est constitué par ses deux vertèbres longitudinales de renfort qui se prolongent transversalement au delà du corps de son talon supérieur 38 pour constituer les ailes 40 qui viennent en appui vertical étanche sur les portions en vis-à-vis de la face supérieure de la vitre 12 adjacentes aux bords 50.

Le troisième mode de réalisation représenté à la figure 6 est analogue au deuxième mode de réalisation représenté à la figure 5, mais la fente 48 est ici délimitée par un bord 50 de la vitre 12 et par un bord en vis-à-vis 50 de la grille 16.

La figure 7 est un quatrième mode de réalisation analogue au précédent en ce que la fente 48 est formée entre un bord 50 de la vitre 12 et un bord 50 appartenant à la grille 16, ces deux bords 50 étant chacun ici équipé d'une garniture 66. Ces garnitures 66 délimitent entre elles le logement 46 et qui sont en appui élastique l'une contre l'autre, de manière à fermer le logement au voisinage de leurs lèvres inférieures 68 entre lesquelles peut être évacué du liquide pénétrant dans le logement 46, avec d'éventuels autres produits polluants.

Sans sortir du cadre de l'invention, la fente 48 peut aussi être formée entre deux bords de la grille d'auvent, entre un bord de la grille d'auvent et un bord de la tôle adjacente de la structure du véhicule, ou entre deux bords de tôle appartenant à la structure du véhicule ou à un élément de carrosserie de celui-ci.

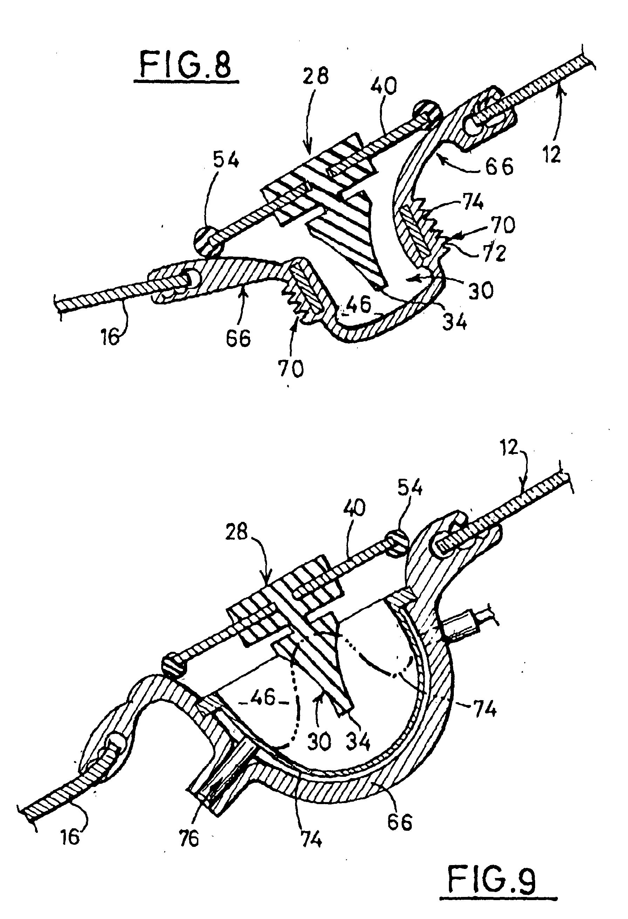

Le cinquième mode de réalisation représenté à la figure 8 est analogue au précédent dans sa conception générale à l'exception des garnitures 66 qui comportent ici des moyens 70 permettant d'assurer une régulation thermique à l'intérieur du logement 46.

Les faces latérales des garnitures 66 peuvent ainsi être configurées sous la forme de radiateurs 72 tandis qu'elles peuvent aussi inclure des éléments chauffants 74.

On assure ainsi une "climatisation" du puits 46 de façon à maintenir la lame dans un environnement optimal pour éviter son vieillissement. Il est aussi ainsi possible d'assurer un contrôle de l'hygrométrie dans le logement 46.

Les éléments chauffants 74 peuvent être par exemple constitués par des dispositifs faisant appel à l'effet Pelletier permettant de réchauffer ou de refroidir le logement 46.

Qu'il s'agisse d'un boîtier rigide ou des garnitures 66 représentées à la figure 8, on dispose d'un logement globalement fermé dans lequel il est de plus possible d'effectuer d'autres opérations.

Selon un agencement non représenté sur les figures, il est par exemple possible d'aménager une caméra ou un capteur optique pour la surveillance de la lame d'essuyage afin de déterminer son état d'usure.

Il est aussi possible d'effectuer un traitement de la lame d'essuyage 30, c'est-à-dire de sa partie inférieure active, lorsque celle-ci est en position escamotée dans le logement 46.

Un tel traitement consiste à mettre les surfaces actives de la lame 30 en contact avec un produit, sous la forme de liquide ou d'un gel, permettant de régénérer le matériau constitutif de la lame ou de déposer sur ses surfaces des produits de traitement de surface.

Il peut par exemple s'agir de produits hydratants ou d'un produit d'halogénation.

Lorsque le boîtier qui délimite la chambre 46 est étanche, le produit de traitement peut être un liquide contenu dans le fond du logement 46 qui constitue alors un bain de traitement.

Le produit de traitement peut aussi être sous forme d'un gel contenu dans le logement 46.

Selon une autre conception, il est possible d'aménager dans le boîtier qui délimite le logement 46 des moyens d'aspersion de la lame avec le produit de traitement.

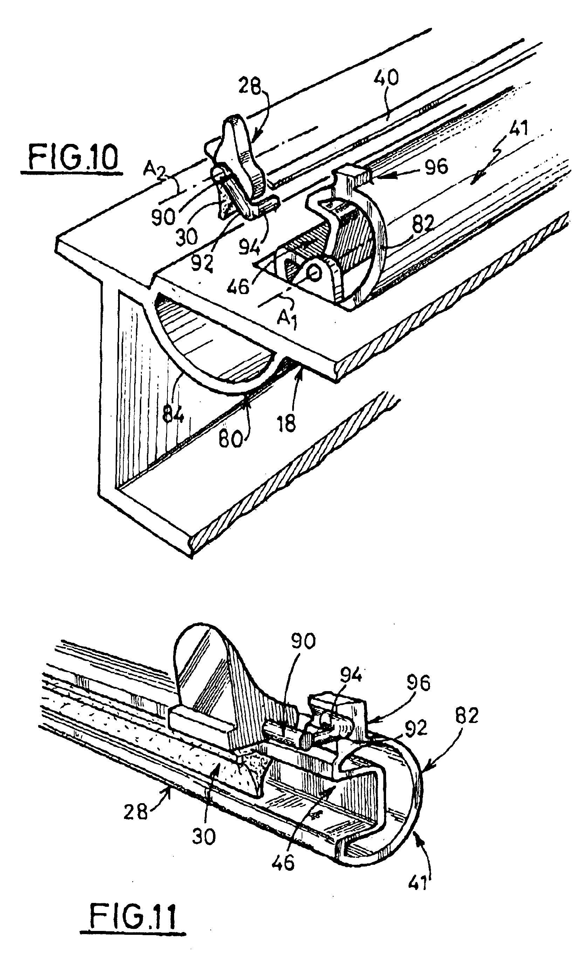

Dans le sixième mode de réalisation représenté à la figure 9, il est prévu d'agencer dans le logement 46, à l'intérieur des garnitures 66, une membrane souple 74 qui est représentée au repos en traits pleins à la figure 9 dans une position dans laquelle le logement 46 est entièrement dégagé.

En injectant de l'air sous la membrane 74, par exemple par des orifices 76, on peut "gonfler" cette membrane, de façon à ce qu'elle se déploie dans le logement 46.

Si la lame d'essuyage n'est pas présente dans le logement 46, le gonflement de la membre 74 peut être complet et elle constitue alors un moyen de fermeture du logement 46 afin d'éviter que celui-ci ne se remplisse de liquide et/ou d'éléments polluants lors du fonctionnement de l'essuie-glace.

Si la lame d'essuyage souple 30 est présente dans le logement 46 au moment du gonflement, celle-ci va venir épouser le profil externe de la lame d'essuyage 30.

Si la face externe de la membrane 74 a été préalablement revêtue d'un gel de traitement, la membrane va alors effectuer un dépôt du gel sur les faces latérales en vis-à-vis et sur le bord d'extrémité libre 34 de la lame d'essuyage 30.

Le gonflement de la membrane peut aussi être utilisé, lors du démarrage de l'essuie-glace, pour pousser la lame d'essuyage 30 en dehors du logement 46.

On décrira maintenant le dernier mode de réalisation illustré aux figures 10 à 15.

Dans ce mode de réalisation, le logement 46 est formé dans un boîtier 41 qui est lui-même un élément monté mobile en rotation par rapport à un élément fixe 80 de structure du véhicule, adjacent à la vitre 12, et ceci autour d'un axe de rotation A1 parallèle à la direction générale longitudinale du logement 46.

Ainsi, le boîtier 41 comporte une paroi périphérique tubulaire convexe 82 qui est montée à rotation dans une paroi cylindrique concave complémentaire 84 de l'élément fixe 80.

Comme on peut le voir dans les différentes sections transversales du boîtier 41, la paroi tubulaire 82 est incomplète et elle se prolonge par une partie en forme de gouttière 44 de section en U qui délimite intérieurement le logement 46.

La paroi semi-cylindrique concave 80 s'étend sur un demi-cercle et elle est ainsi ouverte verticalement vers le haut de manière à permettre d'une part le montage du boîtier 41 et, d'autre part, à donner accès à la partie de ce dernier qui fait saillie vers le haut au delà du plan de la face supérieure plane 88 de l'élément 80 adjacente à la paroi tubulaire semi-cylindrique 84.

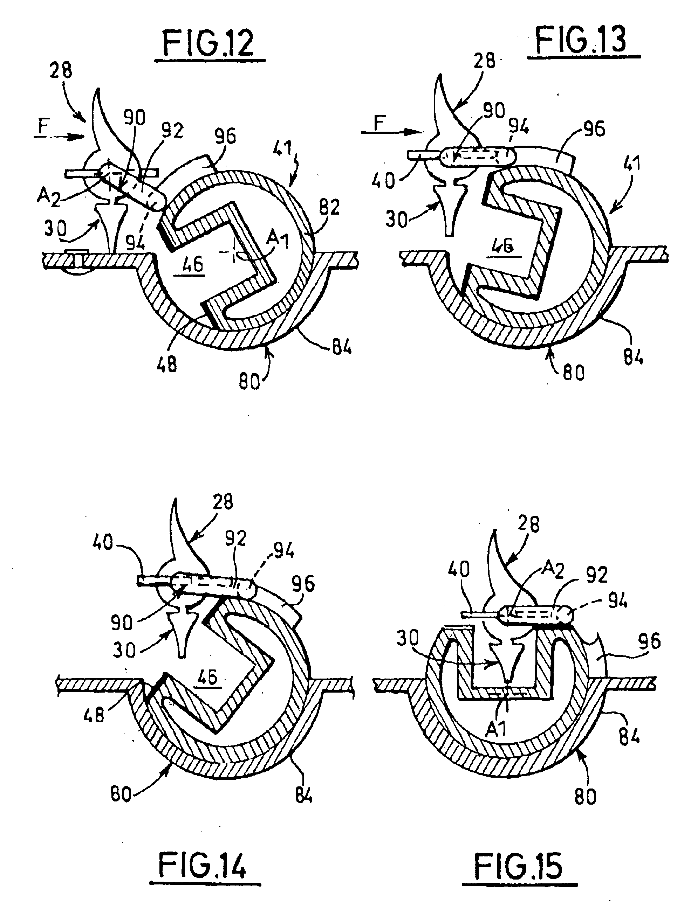

Le boîtier 41 est ainsi monté pivotant entre sa position extrême de repos, représentée à la figure 12, vers laquelle il peut être rappelé élastiquement et qui est défini par des moyens de butée non représentés sur les figures.

Cette position de repos est occupée par le boîtier 41 lorsque l'essuie-glace est en fonctionnement et, dans cette position, la face ouverte 48 donnant accès au logement 46 est globalement orientée vers le bas en considérant la figure 12 et elle est masquée par la paroi tubulaire 82.

Ainsi, dans cette position de repos, il n'y a pas d'ouverture accessible et le logement 46 est entièrement protégé.

L'autre position extrême du boîtier 41 est représentée à la figure 15.

Dans cette position angulaire, qui est ici décalée angulairement d'environ 135° par rapport à la position de repos, le boîtier 41 est dans une position active dans laquelle il peut recevoir la lame d'essuyage 30 et dans laquelle la face supérieure ouverte 48 du logement 46 est orientée verticalement vers le haut.

Le pivotement du boîtier 41 autour de son axe d'articulation A1 depuis sa position de repos illustrée à la figure 12 jusqu'à sa position active représentée à la figure 15, est assuré par l'essuie-glace lui-même, c'est-à-dire par le balai 28.

A cet effet, à l'une de ses extrémités longitudinales, le balai d'essuie-glace 28 comporte un doigt de commande 90 qui comporte une branche radiale 92 montée articulée autour d'un axe longitudinal A2, entre deux positions extrêmes, et qui se prolonge par une branche longitudinale 94 parallèle à l'axe et qui, lorsque la raclette 28 coopère avec le boîtier 41 en forme de tambour, s'étend en regard de celui-ci.

Le doigt 90, par sa branche d'orientation axial 94, est susceptible de coopérer avec un ergot 96 formé en vis-à-vis sur la face externe de la paroi tubulaire 82 du boîtier 41 et qui est agencé longitudinalement au droit du doigt de commande 90.

Lorsque l'essuie-glace approche de sa position de parking, comme cela est représenté à la figure 12, le doigt de commande 90 est dans sa position angulaire basse autour de l'axe A2 et sa branche axiale 94 vient buter contre la face en vis-à-vis de l'ergot 96.

Par rapport au boîtier 41, le balai 28 se déplace globalement selon la flèche horizontale F de la figure 12 et le doigt 90-94 entraîne ainsi en rotation le boîtier 41, autour de l'axe A1, dans le sens horaire en considérant la figure 12.

Au cours de cette rotation, et comme cela est illustré aux figures 13 et 14, le doigt 90, 94 pivote autour de son axe A2 pour atteindre son autre position angulaire extrême dans laquelle il est sensiblement horizontal.

La branche 94 continue à pousser l'ergot 96 pour entraîner progressivement le boîtier 41 jusqu'à sa position active représentée à la figure 15.

Comme on peut le voir à la figure 14, la lame d'essuyage 30 pénètre progressivement dans le logement 46 au fur et à mesure de l'avancement de la lame 30 selon la flèche F et donc au fur et à mesure de la rotation dans le sens horaire du boîtier 41 autour de l'axe A1.

Lorsque l'essuie-glace atteint sa position de parking, la lame d'essuyage 30, comme cela est représenté à la figure 15, est entièrement escamotée dans le boîtier 46 et les ailes 40 constituent le volet de fermeture de la face supérieure ouverte du logement 46.

L'ergot 96 sert de butée pour définir la position angulaire active du boîtier 41 qui est maintenu dans cette position du fait de la présence de la lame d'essuyage 30 qui exerce une pression et des frottements empêchant un retour du boîtier 41 vers sa position de repos illustrée à la figure 12.

Inversement, lorsque l'utilisateur met l'essuie-glace en marche, la lame d'essuyage 30 est entraînée horizontalement de droite à gauche en partant de la figure 15 et la lame 30 entraîne le boîtier 41 dans le sens anti-horaire autour de son axe A1, mouvement dans lequel il est accompagné par ses moyens de rappel élastique.

Il est bien entendu possible de combiner les autres aménagements mentionnés précédemment, relatif notamment à l'observation de la lame d'essuyage et à son traitement lorsqu'elle est en position escamotée dans le logement 46, avec les autres aménagements de la conception selon le dernier mode de réalisation qui vient d'être décrit et faisant appel à un boîtier rotatif 41.

L'invention n'est pas limitée à un balai d'essuie-glace du type "flat-blade" mais elle peut également trouver à s'appliquer dans le cas d'un balai se présentant sous la forme d'une structure articulée classique faisant appel à des étriers articulés de support de la lame, la partie formant volet pouvant par exemple être constituée par des prolongements latéraux des vertèbres de renfort auxquelles les étriers sont fixés par des griffes.

## Revendications

1. Agencement d'un dispositif d'essuie-glace pour l'essuyage d'une vitre (12) de véhicule automobile, notamment d'un pare-brise, du type comportant au moins un essuie-glace (20), animé d'un mouvement de balayage alterné de la vitre, qui comporte notamment une lame souple (30) d'essuyage de la vitre qui est associée à au moins un élément structurel (32) qui s'étend au-dessus de la lame d'essuyage, et du type dans lequel l'essuie-glace est susceptible d'occuper une position de parking dans laquelle au moins la lame d'essuyage (30) est escamotée dans un logement (46) de forme générale allongée selon la direction générale de la lame et qui comporte une face supérieure ouverte (48) par laquelle la lame d'essuyage (30) est susceptible de pénétrer dans le logement (46) lorsque l'essuie glace atteint sa position de parking, et du type comportant un volet (40) de fermeture du logement (46) qui est monté mobile entre une position ouverte dans laquelle la face ouverte (48) du logement est dégagée, et une position fermée dans laquelle le volet (40) obture le logement à l'intérieur duquel la lame d'essuyage (30) est escamotée,
**caractérisé en ce que** le volet constitue un équipage mobile avec la lame d'essuyage (30).

2. Agencement selon la revendication précédente, **caractérisé en ce que** le volet (40) est constitué au moins en partie par l'élément structurel (32) associé à la lame d'essuyage.

3. Agencement selon l'une quelconque des revendications précédentes, **caractérisé en ce que** la face ouverte (48) du logement (46) est délimitée latéralement par deux bords (50) parallèles et opposés, et **en ce que** le volet comporte deux ailes latérales (40) parallèles et opposées qui, en position escamotée de la lame d'essuyage (30), s'étendent transversalement chacune au-dessus et au-dela du bord correspondant (50) de la face ouverte (48) du logement (46), avec interposition de moyens d'étanchéité (54, 56).

4. Agencement selon la revendication précédente, **caractérisé en ce que** les moyens d'étanchéité (54, 56) sont portés par le volet (40).

5. Agencement selon l'une quelconque des revendications précédentes, **caractérisé en ce que** la face ouverte (48) du logement est une fente délimitée par deux bords parallèles opposés (50).

6. Agencement selon la revendication 5, **caractérisé en ce que** la fente (48) est délimitée par deux bords opposés (50) en vis-à-vis appartenant chacun à un élément de structure (16, 18) ou de carrosserie du véhicule.

7. Agencement selon la revendication 5, **caractérisé en ce que** la fente (48) est formée dans la vitre à essuyer (12).

8. Agencement selon la revendication 5, **caractérisé en ce que** la fente (48) est délimitée par un bord (50) de la vitre (12) et par un bord (50) d'un élément de structure (16,18) ou de carrosserie du véhicule.

9. Agencement selon l'une quelconque des revendications 5 à 8, **caractérisé en ce que** chaque bord (50) de la fente est muni d'une garniture (66).

10. Agencement selon l'une quelconque des revendications précédentes, **caractérisé en ce que** le logement (46) comporte des moyens de régulation (70, 72, 74) de la température et/ou de l'hygrométrie à l'intérieur du logement (46).

11. Agencement selon l'une quelconque des revendications précédentes, **caractérisé en ce que** le logement (46) comporte des moyens de traitement physique et/ou chimique de la lame d'essuyage (30) en position escamotée.

12. Agencement selon la revendication précédente, **caractérisé en ce que** lesdits moyens de traitement comportent des moyens d'aspersion de la lame d'essuyage (30) avec un liquide, un gel ou une poudre de traitement.

13. Agencement selon la revendication 11, **caractérisé en ce que** lesdits moyens de traitement comportent un gel ou un liquide de traitement contenu dans le logement pour constituer un bain de traitement de la lame d'essuyage.

14. Agencement selon la revendication 11, **caractérisé en ce que** les moyens de traitement comportent un élément, notamment une membrane gonflable (75), revêtu d'un liquide ou d'un gel de traitement et qui est susceptible de se déplacer pour venir au contact de la lame d'essuyage (30) en position escamotée.

15. Agencement selon l'une quelconque des revendications précédentes, **caractérisé en ce que** le logement (46) comporte des moyens de surveillance optique de l'état de la lame d'essuyage (30) en position escamotée.

16. Agencement selon l'une quelconque des revendications précédentes, **caractérisé en ce qu'**il comporte des moyens (75, 41) de fermeture de la face ouverte (48) du logement (46) lorsque la lame d'essuyage (30) n'est pas escamotée dans le logement (46).

17. Agencement selon la revendication précédente, **caractérisé en ce que** les moyens de fermeture comportent une membrane gonflable (75).

18. Agencement selon la revendication précédente, **caractérisé en ce que** le logement (46) est formé dans un boîtier (41) qui est monté pivotant, par rapport à la structure du véhicule et autour d'un axe (A1) parallèle à la direction longitudinale du logement, entre une position extrême de repos qu'il occupe lorsque l'essuie-glace est en fonctionnement et dans laquelle la face ouverte (48) du logement (46) est masquée, et une position active qu'il occupe lorsque l'essuie-glace est dans sa position de parking et dans laquelle la face ouverte (48) du logement (46) est orientée pour permettre à la lame d'essuyage d'être reçue en position escamotée dans le logement.

19. Agencement selon la revendication précédente, **caractérisé en ce que** des moyens de commande du pivotement du boîtier (41) vers sa position active comportent un ergot (96) de commande avec lequel l'essuie-glace (90, 94) est susceptible de coopérer lorsqu'il approche de sa position de parking.

20. Agencement selon l'une des revendications 18 ou 19, **caractérisé en ce que** le boîtier (41) est rappelé élastiquement vers sa position de repos.

21. Agencement selon qu'une quelconque des revendications 18 à 20, **caractérisé en ce que** la lame d'essuyage (30) comporte une vertèbre de renfort qui coopère avec l'ergot.
